# EUROPEAN PATENT APPLICATION

(11) **EP 4 484 220 A1**
(43) Date of publication of application: **01.01.2025**
(21) Application number: 24183361.5
(22) Date of filing: 20.06.2024
(51) Int. Cl.: B60Q 1/38, B60Q 3/64, B60Q 3/80, F21S 43/237, F21S 43/245, F21S 43/247, F21S 43/20, H05B 45/10

(54) **VEHICLE SIGNALLING OR LIGHTING DEVICE CONFIGURED FOR PROVIDING AN IMPRESSION OF PROGRESSIVE ILLUMINATION FROM A FIRST END TO AN OPPOSITE SECOND END**

(30) Priority: 26.06.2023 IT 202300013170
(71) Applicant: Marelli Automotive Lighting Italy S.p.A. Con Socio Unico, 10078 Venaria Reale (TO) (IT)
(72) Inventor: REGAZZONI, Manuel, 10078 VENARIA REALE (TO) (IT); CLERICI, Francesca, 10078 VENARIA REALE (TO) (IT); CERONE, Roberto, 10078 VENARIA REALE (TO) (IT)
(74) Representative: Studio Torta S.p.A.

(57) **Abstract**

A vehicle signalling or lighting device (1) configured for providing an impression of progressive illumination from a first end to an opposite second end, the device including: a first light guide (2) provided with a first light source (3) at one light inlet end (2-in); a second light guide (4) provided with a second light source (5) at one light inlet end thereof (4-in); and an elongated screen (6) having a first face (6a) facing the first and the second guide (2, 4) and a second face (6b) opposite the first and facing, in use, the outside of the lighting device (1) . An electronic unit implements controlled powering of the first and second light source so that an observer who looks at the elongated screen 6 sees an elongated form of light on an external face thereof (6b) with an intensity that is not uniform along the length of the screen, providing the observer with the impression of light moving from one end to the second end.

## Description

### Cross-reference to related patent applications

This patent application claims priority from Italian patent application no. 102023000013170 filed on June 26, 2023, the entire disclosure of which is incorporated herein by reference.

### Technical field

This invention relates to a vehicle signalling or lighting device for providing an impression of progressive illumination from a first end to an opposite second end.

### Background of the invention

Vehicle signalling or lighting devices configured for providing an impression of progressive illumination from a first end to an opposite second end have recently been proposed.

For example, the patent US10053005B2 describes a vehicle lighting device able to show a moving light with a reduced number of light sources and to reduce costs. The internal lighting device of the vehicle comprises: a light guide element, a light source unit, another light source unit, and a control unit. The control unit switches on the other light source after switching on the unit of a light source, switches off the unit of a light source after switching on the other light source, and switches off the other light source after switching off the unit of a light source.

The patent DE102020214361A1 describes a sequential lighting system that comprises a light guide configured to enable the reflection and movement of a part of the light when this hits an inner side and the transmission and emission of a part of the light outside. It also comprises a first and second light source, respectively at one end and at the other of the light guide, configured to apply the light in the light guide in various positions. Finally, it also includes a control unit able to control the lighting of the first and second light sources and to control the lighting time of the first and second light sources to enable the light guide to emit the light in a sequential lighting mode.

### Subject of the invention

The aim of this invention is to provide a vehicle signalling or lighting device configured for providing an impression of progressive illumination from a first end to an opposite second end in a simple way with reduced costs without needing multiple light sources that are switched on and off in sequence.

### Purpose of this invention

The above aim is achieved with this invention in that it relates to a vehicle signalling or lighting device for providing an impression of progressive illumination from a first end to a second opposite end of the type described in claim 1.

### Description of the figures

The invention will be illustrated with reference to the accompanying figures wherein:
Figure 1 schematically illustrates a vehicle signalling or lighting device for providing an impression of progressive illumination from a first end to an opposite second end produced according to the precepts of this invention;
Figure 2 illustrates, in cross-section, the device in Figure 1 produced according to two possible alternatives;
Figure 3 and Figure 4 illustrate the operating principle of the device according to this invention;

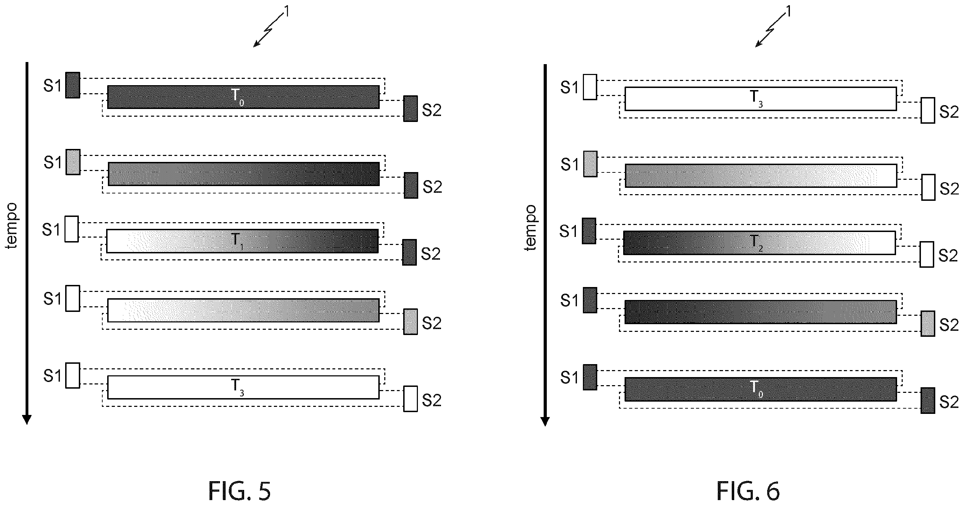

Figure 5 illustrates a series of sequences of a switch-on cycle of the device in Figure 1;
Figure 6 illustrates a series of sequences of a switch-off cycle of the device in Figure 1;
Figure 7 illustrates the control operated for switching-on; and
Figure 8 illustrates the control operated for switching-off.

### Preferred description of the invention

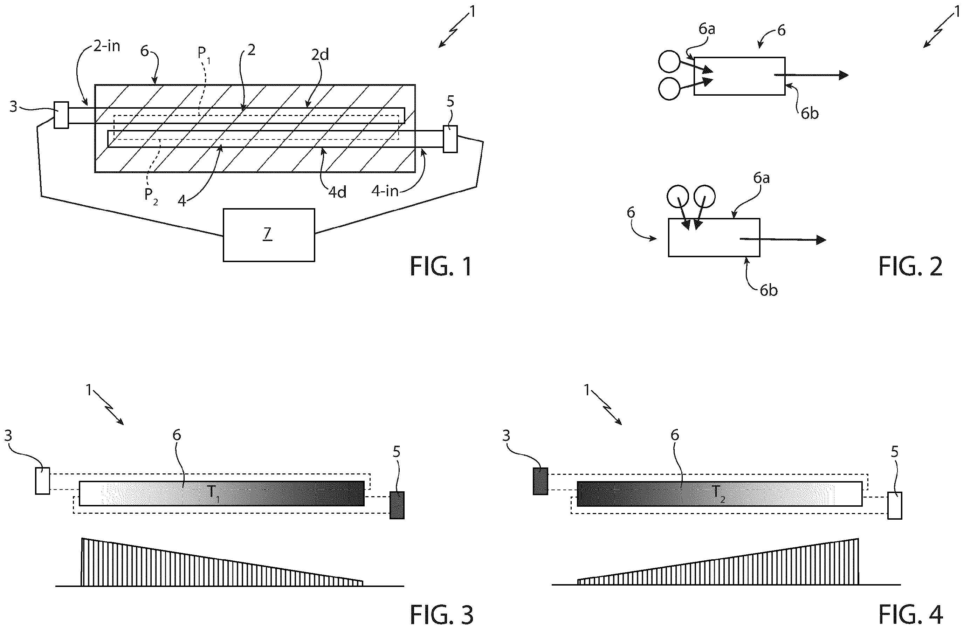

With reference to Figure 1, the number 1 identifies a vehicle signalling or lighting device configured for providing an impression of progressive illumination from a first end to an opposite second end.

The device 1 comprises a first light guide 2 provided with at least one first linear portion 2d that extends for a certain path P1 (identified with dashed lines, in the example this is a straight path, obviously the path may have a different shape); the first light guide 2 is provided with a first light source 3, at a light inlet end 2-in thereof, conveniently consisting of an LED diode that supplies the light guide 2 with light.

The device 1 also comprises a second light guide 4 provided with at least one second linear portion 4d that extends along a path P2 (indicated with dashed lines, in the example this is a straight path, obviously the path may have a different shape) parallel and next to the path P1. In this way, the first linear portion 2d and the second linear portion 4d are parallel to each other.

The second light guide 4 is next to the first light guide 2. The second light guide 4 is provided with a second light source 5 at one light inlet end 4-in thereof, conveniently consisting of an LED diode that supplies the light guide 4 with light.

The device 1 also comprises an elongated screen 6, at least partially pervious to light, which has a first face 6a facing the first and second guide 2, 4 and a second face 6b (in the example a face opposite the first but the arrangement may be different) and facing, in use, the outside of the device 1.

The first and the second light source 3, 5 are arranged at opposite ends of the elongated screen 6 and are controlled by an electronic unit 7 that carries out alternatively at least one switch-on cycle or one switch-off cycle.

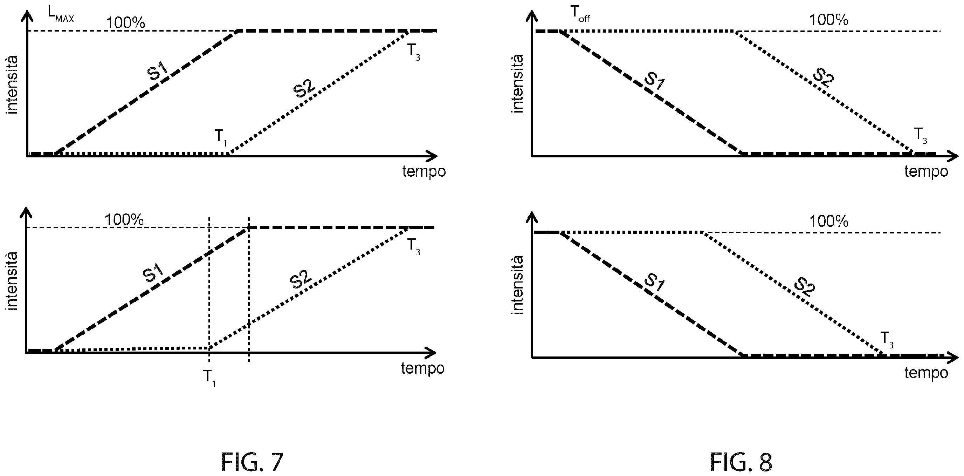

The switch-on cycle comprises (see Figure 7):
- the controlled powering of the single first source 3 at a first start time (T₀) increasing (in the example a linear ramp S1 but the growth profile may be different) the light intensity generated by the first source 3 from a value that is basically zero to a limit value Lₘₐₓ (100%) while the second source is initially kept switched off (the intensity is zero); and
- the subsequent controlled powering of the second source 5 at a second time T₁ subsequent to the first time T₀ increasing the light intensity from the second source 5 (in the example a linear ramp S2 but the growth profile may be different) from a substantially null value to the limit value Lₘₐₓ while the first source 3 is kept switched on.
- At the end of the switch-on cycle (time T₃) both the sources 3, 5 are switched on;

The switch-off cycle comprises:
- the controlled powering of the first source 3 at a third stop time (T_{off}) reducing the light intensity (in the example, a linear ramp S2 but the reduction profile may be different) generated by the first source 3 from a limit value Lₘₐₓ (100%) to a value that is basically zero while the second source 5 is initially kept switched on with intensity limit value Lₘₐₓ (100%);
- the subsequent controlled powering of the second source 5 in a fourth subsequent time T2 at the third stop time (T_{off}) reducing (in the example, a linear ramp S2 but the reduction profile may be different) the light intensity of the second source 5 from the intensity limit value Lₘₐₓ (100%) towards a value that is basically zero.
- At the end of the switch-off cycle (time T₃) both the sources 3, 5 are switched off.

**For example,** in which at the second time T₁ the first source reached the intensity limit value Lₘₐₓ (100%), see Figure 7 at top.

**Alternatively,** wherein at the second time T₁ the first source 3 has not yet reached the intensity limit value Lₘₐₓ (100%), see Figure 7 at the bottom, and is still increasing.

**In addition,** at the fourth time T₂ the first source 3 has reached the substantially null intensity value.

**Alternatively,** at the fourth time T₂ the first source has not yet reached said substantially null value.

Based on the operations illustrated above, an observer who looks at the elongated screen 6 sees an elongated form of light on the face 6b that has a non-uniform intensity along the length of the screen, providing the observer with an impression of the light moving from a first end to the second in the switch-on cycle and from the second to the first in the switch-off cycle. This effect is produced using only two LED diodes 3 and 5, two light guides 2, 4, and one screen 6 and, therefore, the device 1 is simpler and less costly. Switching on the source 3 and the subsequent source 5 provides an impression of the light moving from left to right while switching on the source 5 and the subsequent source 3 provides an impression of the light moving from right to left.

Similarly, switching off the source 3 and the subsequent source 5 provides an impression of the light moving in a first direction, while switching off the source 5 and the subsequent source 3 provides an impression of the light moving in a second direction.

The control unit 7 produced using a dedicated microprocessor and simple electronics, which controls a variable supply voltage for the LED diodes 3 and 5, also has reduced costs.

## Claims

1. A vehicle signalling or lighting device (1) configured for providing an impression of progressive illumination from a first end to an opposite second end, the device comprising:
- a first light guide (2) provided with at least one first linear portion (2d); the first light guide (2) is provided, at one light inlet end thereof (2-in), with a first light source (3);
- a second light guide (4) provided with at least one second linear portion (4d) which is parallel to said first linear portion (2d); the second light guide (4) is provided, at one light inlet end thereof (4-in), with a second light source (5) ;
- an elongated screen (6) having a first face (6a) facing the first and the second guide (2, 4) and a second face (6b) facing, in use, the outside of the lighting device (1);
- the first and the second light source (3,5) are arranged at opposite ends of the elongated screen (6) and are controlled by an electronic unit (7) that carries out alternatively at least one switch-on cycle or one switch-off cycle: the switch-on cycle comprising:
- the controlled powering only of the first source (3) at a first start time (T₀) increasing the light intensity generated by the first source (3) from a substantially null value while the second source (5) is kept initially switched off; and
- the subsequent controlled powering of the second source (5) in a second time T₁ subsequent to the first time T₀ increasing the light intensity generated by the second source (5) from a substantially null value while the first source (3) is already switched on;
- at the end of the switch-on cycle both the sources (3,5) are on;
the switch-off cycle comprising:
- the controlled powering of the first source (3) at a third stop time (T_{0ff}) reducing the light intensity generated by the first source (3) towards a substantially null value while the second source (5) is initially kept switched on;
- the subsequent controlled powering of the second source (5) at a fourth time (T2) subsequent to the third stop time (T_{0ff}) decreasing the light intensity from the second source (5) towards a substantially null value;
- at the end of the switch-off cycle both the sources (3,5) are off.

2. The device according to claim 1, wherein at the second time (T₁) the first source has already reached an intensity limit value Lₘₐₓ (100%).

3. The device according to claim 1, wherein at the second time T₁ the first source (3) has not yet reached an intensity limit value Lₘₐₓ (100%) and the intensity is still increasing.

4. The device according to claim 1, wherein at the fourth time T₂ the first source (3) has already reached the substantially null intensity value.

5. The device according to claim 1, wherein at the fourth time T₂ the first source has not yet reached said substantially null value and the intensity is still decreasing.

6. The device according to one of the preceding claims, wherein the electronic unit (7) is configured to increase the light intensity according to a ramp linear profile.

7. The device according to one of the preceding claims, wherein the electronic unit (7) is configured to decrease the light intensity according to a ramp linear profile.

8. The device according to one of the preceding claims, wherein the electronic unit is configured to cyclically repeat the switch-on and switch-off cycles.
